# EUROPEAN PATENT SPECIFICATION

(11) **EP 0 990 316 B1**
(45) Date of publication and mention of the grant of the patent: **02.01.2008**
(21) Application number: 99901808.8
(22) Date of filing: 04.02.1999
(51) Int. Cl.: H04B 7/005

(54) **A POWER CONSUMPTION REDUCTION METHOD IN A DIGITAL MOBILE RADIO SYSTEM AND A MOBILE RADIO STATION**
VERFAHREN ZUR LEISTUNGSVERBRAUCHSVERMINDERUNG IN EINEM DIGITALEN MOBILFUNKSYSTEM UND EINE MOBILE FUNKSTATION
PROCEDE DE REDUCTION DE LA CONSOMMATION D'ENERGIE DANS UN SYSTEME RADIOTELEPHONIQUE MOBILE NUMERIQUE ET STATION RADIOTELEPHONIQUE MOBILE

(30) Priority: 20.02.1998 EP 98400421
(43) Date of publication of application: 05.04.2000
(73) Proprietor: NXP B.V., 5656 AG Eindhoven (NL)
(72) Inventor: LAURENT, Eric, NL-5656 AA Eindhoven (NL)
(74) Representative: Pennings, Johannes
(86) International application number: PCT/IB1999/000197
(87) International publication number: WO 1999/043099

(56) References cited:
- EP-A2- 0 314 962
- EP-A2- 0 568 516
- GB-A- 2 289 386
- US-A- 5 666 355
- DIGITAL CELLULAR TELECOMMUNICATIONS SYSTEM (PHASE 2) RADIO SUBSYSTEM LINK CONTROL (GSM 05.08 VERSION 4.18.3), August 1997 (1997-08),

## Description

The present invention relates to a power consumption reduction method in a digital mobile radio system as defined in the preamble of claim 1.

The present invention further relates to a mobile radio station.

Such a power consumption reduction method is described in Chapter 6.2 of the Draft European Telecommunication Standard ETS 300 578, Ninth Edition, March 1997 as published by ETSI, "GSM Digital cellular telecommunications system (Phase 2); Radio subsystem link control (GSM 05.08)". Generally, in digital mobile radio systems, such as a GSM system, RF power control is employed to minimize the transmit power required by a mobile or a base station subsystem whilst maintaining the quality of the radio links. By minimizing the transmit power levels, interference to co-channel users is reduced. Moreover, in a mobile it is important to save power because increased battery life increases call times and standby times. For the latter reason, manufacturers of mobiles are continuously striving to reduce power consumption in mobiles. In Chapter 6.2 of said ETSI document, it is prescribed how a mobile, as one of its idle mode tasks, should perform measurements for normal cell selection, when a mobile has no prior knowledge of which GSM or DCS 1800 RF channels are BCCH carriers. Such BCCH carriers are broadcast control channels for broadcasting general information on a transceiver base station per base transceiver station basis. In GSM, radio frequency channels are defined, and numbers are allocated to all the radion frequency channels available to the system. Each cell is allocated a subset of these channels, defined as the cell allocation. The BCCH carrier is a special radio frequency channel of the cell allocation which is used to carry synchronization information and said general information, including the organization of the so-called common control channels such as paging channels, random access channels, and access grant channels used for setting up radio links between mobiles and the GSM network. In Chapter 6.2, it is prescribed that a mobile shall search all RF channels in the system, taking readings of received RF signal strength on each RF channel, and calculate the received level average for each, the average being based on at least five measurement samples per RF carrier spread over 3 to 5 seconds, and the measurement samples from the different RF carriers being spread evenly during this period. On finding a BCCH carrier, the mobile shall attempt to synchronize to it and read the BCCH information. Mobiles can be single band or multi band mobiles. An example of a multi band mobile is a dual band GSM (900 MHz)/ DCS 1800 (1800 MHz) mobile. In Chapter 6.2, it is prescribed that a multi band mobile shall search all channels within its bands of operation as described above. Then, the number of channels searched will be the sum of channels on each band of operation.

It is an object of the present invention to provide a power consumption reduction method in a mobile radio system whilst a mobile radio station is in a non-calling mode, in which the power measurement phase is speeded up, particularly, in idle mode, before initial cell selection for multi band mobiles, or during a PLMN (Public Land Mobile Radio Network) search, and in emergency idle mode, during a home PLMN search.

To this end the power consumption reduction method as defined in the preamble of claim has the characterizing features as claimed in the characterizing part of claim 1. Herewith, the power measurement phase is optimized so that the mobile can adopt a power down state within the shortest possible time. Thus, in this phase, optimum power consumption reduction is achieved, and further a better user perceived performance.

In Chapter 6.2 of ETS 300 578 it is not stated whether the duration requirement (3 to 5 seconds) applies for each measurement phase on each band of operation, or for the overall multi-band measurement phase. Furthermore, the number of power measurements a mobile can perform depends on the particular hardware of the mobile, such as, how fast a frequency synthesizer can stabilize after channel switching, and how fast a mobile can synchronize to a new radio channel, for instance. The present invention is thus based upon the insight how to maximally exploit the hardware possibilities of a mobile and optimally divide the power measurements of different frequency bands over the total measurement phase while still achieving evenly spreading of the measurements as prescribed in ETS 300 578, Chapter 6.1, and also when performing a PLMN search or a home PLMN search. In a dual band mobile, with 4 measurements per frame, exploiting optimal hardware possibilities, and with interleaving, as compared to applying 3 measurements per frame, as is done usually, and a straight forward successive per band measurement, the method according to the present invention achieves a 50 % reduction of the power measurement phase. In a triple band mobile, with 5 measurements per frame, an even greater reduction is obtained.

In the embodiment as claimed in claim 2, an even greater reduction is obtained. This is based upon the insight that inter-channel synthesizer stabilization within the same band is quicker than synthesizer stabilization from one band to another band.

In claims 3, 4, and 5, the different embodiments applying the method as claimed in claim 1, are claimed, in the non-calling mode of the mobile, namely, in idle mode, the initial cell selection, and the PLMN search, and in emergency idle mode, the home PLMN search.

The present invention will now be described, by way of example, with reference to the accompanying drawings, wherein
Fig. 1 schematically shows a digital mobile radio system according to the present invention,
Fig. 2 shows a block diagram of a mobile radio station according to the present invention,
Fig. 3 shows a block diagram of a radio base station,
Fig. 4 shows a TDMA frame,
Fig. 5 shows a combination of logical channels to be conveyed via a physical channel, and
Fig. 6 shows a timing diagram illustrating the power consumption reduction method according to the present invention.

Throughout the figures the same reference numerals are used for the same features.

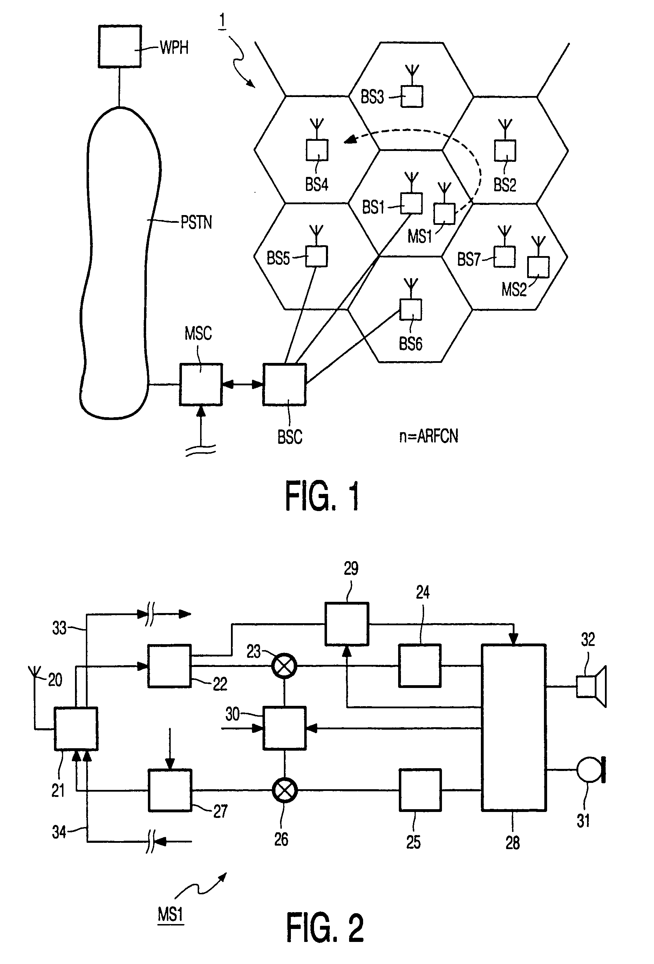

Fig. 1 schematically shows a digital mobile radio system 1 according to the present invention comprising a number of base stations BS1, BS2, BS3, BS4, BS5, BS6 and BS7 serving mobile radio stations in radio cells or zones they cover. The cells are indicated as hexagonal structures. Mobile radio stations MS1 and MS2 are shown in Fig. 1. The mobile radio station is near the radio base station BS1 so that most likely BS1 is the serving base station and BS2 to BS7 are neighbouring base stations or most likely non-serving base stations. A dashed line from the mobile radio station MS1 indicates that the mobile radio station MS1 may roam through the mobile radio system 1. When the mobile radio station MS1 is roaming, another base station may become the serving station. Further shown is a base station controller BSC which is coupled to a number of base stations, in the example given the radio base stations BS 1, BS5 and BS6. The base station controller BSC is coupled to a mobile switching centre MSC to which further base station controllers can be coupled. Some mobile switching centres have a gate to a public switched telephone network PSTN of fixed network subscribers such as the wired phone WPH. To the fixed network PSTN also other mobile phone systems may be coupled. Mobile phone systems operated by different operators may cover geographically disjunct or overlapping areas, and may share the same frequency band or operate in different frequency bands. Frequencies are allocated to different operators such that, in principle, the various systems do not interfere with each other. Such a digital mobile radio system 1 can be a GSM system operating in the 900 MHz band and/or a DCS 1800 system operating in the 1800 MHz band or any combination of systems operated by the same or by different operators. In the example given, the mobile radio system is a GSM and/or DCS 1800 system and/or PCS system (Personal System for Communications, a US derivative of DCS 1800 operating in the 1900 MHz band), so that the system, or the mobile can be a single, a dual or a triple band system, or mobile. Another combination of a triple band system is E-GSM (Extended GSM) + DCS + PCS. A GSM system as standardised by ETSI (European Telecommunications Standards Institute), is a digital mobile radio system having two 25 MHz bands, an 890-915 MHz uplink band in which mobiles transmit to the network, and a 935-960 downlink band in which base stations transmit to mobiles, frequency channels within these bands having a 200 kHz bandwidth. Radio communications between mobiles and base stations is full duplex with a 45 MHz duplex spacing. The GSM system has 124 active frequency channels which have been given absolute radio frequency channels numbers ARFCN. Herewith, the frequencies in the uplink and downlink bands are defined as 890 MHz + 0.2 MHz * n, and the frequency of the uplink channel + 45 MHz, respectively. A radio cell usually has between 1 and 16 frequencies which can be assigned to a mobile in a cell on an FDMA basis (Frequency Division Multiple Access). In so-called E-GSM (Extended GSM), there are 174 frequency channels. In DCS 1800, the uplink occupies a 1710-1785 MHz band, and the downlink an 1805-1880 MHz band, the duplex spacing being 95 MHz. With a frequency channel bandwidth of 200 MHz, DCS 1800 has 374 frequency channels. To distinguish from GSM and E-GSM, DCS 1800 has ARFCNs in a range 512 to 885. In all these systems, physical radio channel resources are allocated on an FDMA and TDMA (Time Division Multiple Access) basis. In TDMA, each frequency is further subdivided into eight different time slots numbered from 0 to 7, each of which can be assigned to a mobile phone subscriber or user. A set of eight time slots form a physical frame, in GSM having a duration of 4.615 msec. For a more detailed description of a GSM system, referred is to the handbook "An Introduction to GSM", S.M. Redl et al., Artech House, Inc., 1995, pp. 71-77, 86-100, 111, and 163-165. A superset of E-GSM is R-GSM (Railway GSM, currently under standardisation).

Fig. 2 shows a block diagram of the mobile radio station MS1 according to the present invention. The mobile radio station MS1 comprises an antenna 20 which is coupled to a receive path and a transmit path via a duplexer 21. The receive path comprises an RF-amplifier and filter 22, a down-mixer 23 and a demodulator 24, and the transmit path comprises a modulator 25 an up-mixer 26, and a power amplifier 27. The demodulator and modulator 24 and 25 are coupled to a baseband and audio processing and control unit 28 comprising components such as a digital signal processor, programmed memory and random access memory, input/output ports for controlling components in the mobile radio station MS1, and other processing capabilities well known in the art. Further shown are a received signal strength indicator 29 for measuring the field strength of the received radio channel, the indicator 29 being coupled between the radio part and the control unit 28, a controllable frequency synthesizer 30 for adjusting a desired radio channel, a microphone 31 and a speaker 32. With further receive and transmit path 33 and 34, having a similar construction as the described receive and transmit path, it is indicated that the mobile radio station can be a multi-band station, e.g. a dual band station being able to receive GSM and DCS 1800 signals or a triple band station being able to receive signals from three different systems. In the mobile station MS 1, integrated circuits and other circuits comprising the shown blocks may be powered down by the unit 28 so as to reduce power consumption. In the sequel, power consumption reduction according to the present invention will be described.

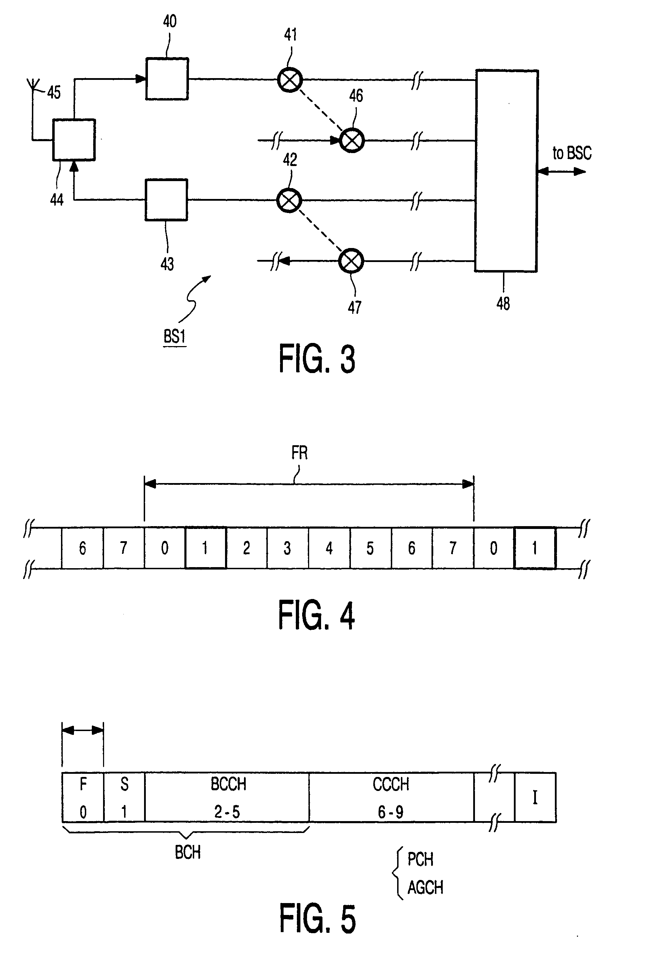

Fig. 3 shows a block diagram of the radio base station BS1 comprising a number of transceivers of which one transceiver is shown in more detail. The shown transceiver comprises a receive path comprising an RF amplifier/filter 40 and a down-mixer 41, and a transmit path comprising an up-mixer 42 and a power amplifier 43, the amplifier/filter and the power amplifier being coupled to a duplexer 44 which is further coupled to an antenna 45. Further mixers and 47, and dashed lines between mixers indicated a repetition of the same transceiver structure. All mixers are coupled to a programmed computer apparatus 48 via demodulators and modulators (not shown in detail), the apparatus 48 being programmed such as to carry out well-known signalling tasks in the GSM system, and base station internal control tasks.

Fig. 4 shows a TDMA frame FR. In the example given, a time slot numbered 1 is assigned to a mobile radio station. To save power, the mobile at least switches off its transmitter during intermediate time slots numbered 2 to 7 and 0. In GSM, uplink and downlink time slots are offset by three slots. Herewith, full duplex operation is achieved on a TDD basis (time division duplex). The described physical FDMA/TDMA channels structure of frequencies and time slots is the conveying means for conveying logical traffic and control data.

Fig. 5 shows a combination of logical channels to be conveyed via a physical channel. The logical channels, traffic and control channels, are mapped onto the shown physical channels. Shown is an 51 frames multi-frame signalling frame of a logical channel combination conveyed on a physical channel in the downlink direction. For initial synchronisation of a mobile to the mobile radio network, the 51-multi-frame a frequency correction channel F in frame numbered 0, and a synchronisation channel in the succeeding frame. Frames 2-5 carry BCCH data, system messages broadcast from a radio base station to mobiles, and frames 6-9 carry common control channels, such as paging channels PCH for paging a mobile, and access grant channels to grant a dedicated signal to a mobile upon request. After frequency and time synchronisation to the network, a mobile reads system and cell data from the BCCH. The shown 51-multi-frame can be transmitted on any frequency available to a cell, but is always transmitted on a time slot numbered 0. Herewith, a mobile can always easily find synchronisation information and system broadcast messages. The frequency on which this combination is transmitted is used as a reference in the neighbouring cells to mark it as an adjacent cell, i.e mobiles in neighbouring cells perform their periodic measurements on this frequency during time slot 0.

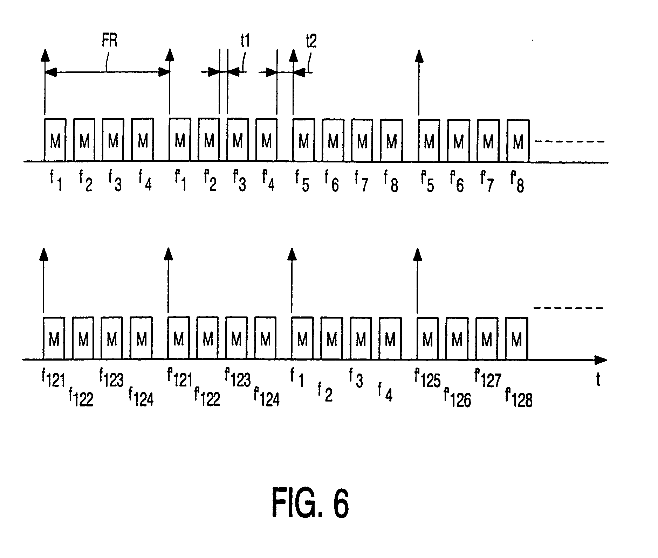

Fig. 6 shows a timing diagram illustrating the power consumption reduction method according to the present invention. In Chapter 6.2 of said Draft European Telecommunication Standard ETS 300 578, it is specified how a mobile should perform power measurements before initial cell selection. For a single band mobile, it is prescribed that the mobile should perform a number of evenly distributed power measurements on each frequency of its operating band. For a multi band mobile, it is prescribed that the measurement is done for each band. According to the present invention, for a multi-band mobile, for the respective bands, the measurements are interleaved, and, furthermore, a maximum number of measurements is squeezed into single frame, such that still meaningful measurements are achieved, within the stabilisation capability of the frequency synthesizer 30. According to the present invention, the scanned band is changed on a frame by frame basis. Each frequency in each frequency band is measured at least 5 times. Fig. 6 shows an example with four measurements per frame for a dual-band GSM/DCS 1800 mobile radio station MS1, "M" indicating a measurement. The GSM band has 124 channels and the DCS 1800 band 374 channels. In the first frame, the frequency channels f1, f2, f3, and f4 of the GSM band are scanned, in the second frame the frequency channels f1', f2', f3', and f4' of the DCS 1800 band, then, alternately, the frequencies f5, f6, f7, and f8, f5', f6', f7', and f8', until the frequencies f121, f122, f123, and f124, and f121', f122', f123', and f124' of the respective GSM and DCS 1800 band. Thereafter, the measurements of the frequencies f1, f2, f3, and f4 of the GSM band are repeated, followed by DCS 1800 measurements at frequencies f125', f126', f126', and f127'. As compared to a straightforward band after band scanning, with a usual three measurements per frame, the method according to the present invention gives a 50% shorter measurement phase, 3 seconds instead of 6 seconds. Herewith, considerable power savings can be achieved, because the period of activity of the mobile during initial cell selection is considerably reduced. Furthermore, a better user perceived performance is achieved. The unit 28 can power down most of the circuitry not needed for other purposes. Particularly powering down the frequency synthesizer 30 gives considerable power savings. Advantageously, the unit 28, using the RSSI 29, applies a shorter synthesizer stabilizing period between power measurements within the same frequency band than between power measurements of different bands, indicated in Fig. 6 with a shorter period t1 than a period t2. This can be done because for succeeding measurements in the same band the synthesizer jumps are much smaller that for succeeding measurements in different bands. For a triple band mobile radio station, measurements of three bands are interleaved. The same interleaved measurement scheme may be applied to reduce a PLMN search in multi-band mobiles when in idle mode, or to reduce a home PLMN search in multi-band mobiles when in emergency idle mode. Although the GSM Standard is not prescribing an evenly spreading for the latter searches, evenly spreading gives a better measurement performance when the mobile is moving in a multipath signal reception environment. During PLMN searches, a measurement phase similar to an initial cell selection measurement phase is started.

## Claims

1. A power consumption reduction method in a digital mobile radio system (1) comprising at least one radio base station (BSi) and a plurality of mobile radio stations (MSi) and including frequency division and time division radio resources in the form of frames (FR) of time slots at radio frequency carriers (fi), the mobile radio station (MSi) being in a non-calling mode, the method comprising the step of:
a) carrying out of power measurements by the mobile radio station (MSi) by measuring received signal strengths of multi-band radio frequency carriers (fi, fi'), **characterized in that** the power consumption reduction method further comprises the steps of:
b) performing a maximum number of power measurements (M) per frame (FR) as permitted by the radio frequency hardware of the mobile radio station (MSi), such that, taking a speed with which the mobile radio station (MSi) can synchronize to a new radio channel into account, still meaningful power measurement samples are obtained when the mobile radio station (MSi) is tuned from one frequency channel (fi, fi') to another frequency channel (fi, fi'), and
c) interleaving power measurements (M) of respective frequency bands of the multi-band radio frequency carriers (fi, fi') such that an even spread of the power measurements of the radio frequency carriers (fi, fi') over the multi-band is obtained.

2. A power consumption reduction method as claimed in claim 1, wherein a period in time (t1) between power measurements (M) in a contiguous block of power measurements (M) for the same frequency band is smaller than a period of time (t2) between succeeding power measurements (M) for different frequency bands, the periods of time being needed for stabilizing a synthesizer (30) frequency of the mobile radio station (MSi) after switching from one radio frequency channel (fi, fi') to another.

3. A power consumption reduction method as claimed in claims 1 or 2, wherein the non-calling mode is an initial cell selection mode.

4. A power consumption reduction method as claimed in claims 1 or 2, wherein the non-calling mode is a mode in which the mobile radio station (MSi) carries out a search for a public land mobile radio network.

5. A power consumption reduction method as claimed in claims 1 or 2, wherein the non-calling mode is a mode in which the mobile radio station (MSi) carries out a search for its home public land mobile radio network when being in an emergency idle mode.

6. A mobile radio station (MSi) applying the method as claimed in claim 1.

## Patentansprüche

1. Verfahren zur Leistungsverbrauchsverminderung in einem digitalen Mobilfunksystem (1), umfassend mindestens eine Funkbasisstation (BSi) und mehrere mobile Funkstationen (MSi), und einschließlich Frequenzteilungs- und Zeitteilungsfunkressourcen in Form von Rahmen (FR) von Zeitschlitzen an Funkfrequenzträgern (fi), wobei sich die mobile Funkstation (MSi) in einem nicht-rufenden Modus befindet, wobei das Verfahren folgende Schritte umfasst:
a) das Ausführen von Leistungsmessungen durch die mobile Funkstation (MSi) durch das Messen empfangener Signalstärken von Mehrband-Funkfrequenzträgern (fi, fi'),
**gekennzeichnet dadurch, dass** das Verfahren zur Leistungsverbrauchsverminderung ferner folgende Schritte umfasst:
b) das Durchführen einer maximalen Anzahl von Leistungsmessungen (M) pro Rahmen (FR) wie zugelassen durch die Funkfrequenzhardware der mobilen Funkstation (MSi), so dass, unter Berücksichtigung einer Geschwindigkeit, mit welcher sich die mobile Funkstation (MSi) mit einem neuen Funkkanal synchronisieren kann, noch immer sinnvolle Leistungsmessungsstichproben erhalten werden, wenn die mobile Funkstation (MSi) von einem Frequenzkanal (fi, fi') auf einen anderen Frequenzkanal (fi, fi') eingestellt wird, und
c) das Verschachteln von Leistungsmessungen (M) von entsprechenden Frequenzbändern der Mehrband-Funkfrequenzträger (fi, fi'), so dass eine gleichmäßige Verteilung der Leistungsmessungen der Funkfrequenzträger (fi, fi') über das Mehrfachband erhalten wird.

2. Verfahren zur Leistungsverbrauchsverminderung nach Anspruch 1, wobei ein Zeitraum (t1) zwischen Leistungsmessungen (M) in einem benachbarten Block von Leistungsmessungen (M) für das gleiche Frequenzband kleiner ist als ein Zeitraum (t2) zwischen nachfolgenden Leistungsmessungen (M) für unterschiedliche Frequenzbänder, wobei die Zeiträume zum Stabilisieren einer Synthesizer (30) -Frequenz der mobilen Funkstation (MSi) nach dem Umschalten von einem Funkfrequenzkanal (fi, fi') auf einen anderen benötigt werden.

3. Verfahren zur Leistungsverbrauchsverminderung nach Anspruch 1 oder 2, wobei der nicht-rufende Modus ein anfänglicher Zellenauswahlmodus ist.

4. Verfahren zur Leistungsverbrauchsverminderung nach Anspruch 1 oder 2, wobei der nicht-rufende Modus ein Modus ist, in welchem die mobile Funkstation (MSi) eine Suche nach einem öffentlichen Mobilkommunikationsnetz ausführt.

5. Verfahren zur Leistungsverbrauchsverminderung nach Anspruch 1 oder 2, wobei der nicht-rufende Modus ein Modus ist, in welchem die mobile Funkstation (MSi) eine Suche nach einem öffentlichen Heimat-Mobilkommunikationsnetz ausführt, wenn sie sich in einem Notfall-Ruhezustand befindet.

6. Mobile Funkstation (MSi), welche das Verfahren nach Anspruch 1 anwendet.

## Revendications

1. Procédé de réduction de la consommation dans un système radio mobile (1), comprenant au moins une station de base radio (BSi) et une pluralité de stations radio mobiles (MSi), et comprenant des ressources à division de fréquence et à division de temps sous la forme de trames (FR) d'intervalles de temps sur des porteuses radiofréquences (fi), la station radio mobile étant dans un état d'absence d'appel, procédé comprenant les étapes consistant :
a) à effectuer des mesures de puissance par la station radio mobile (MSi) mesurant des puissances de signal reçu pour des porteuses de fréquences radio dans des bandes multiples (fi, fi'),
**caractérisé par le fait que** le procédé de réduction de consommation comprend en outre les étapes consistant :
b) à effectuer un nombre maximum de mesures de puissance (M) par trame (FR) en fonction de ce qui est autorisé par le matériel radio de la station radio mobile (MSi), de telle sorte que si l'on prend en compte la vitesse à laquelle la station radio mobile (MSi) peut se synchroniser sur un nouveau canal radio, on obtient des échantillons de mesure de puissance encore pertinents lorsque la station radio mobile est syntonisée d'un canal de fréquence (fi, fi') vers un autre canal de fréquence (fi, fi'), et
c) à entrelacer les mesures de puissance (M) des bandes de fréquences respectives des porteuses radiofréquence dans des bandes multiples (fi, fi'), de telle sorte que l'on obtient une répartition égale des mesures de puissance des porteuses radiofréquence (fi, fi') sur les bandes multiples.

2. Procédé de réduction de la consommation selon la revendication 1, dans lequel une période de temps (t1) entre des mesures de puissance (M) d'un bloc continu de mesures de puissance (M) pour la même bande de fréquence est plus petit qu'un intervalle de temps (t2) entre des mesures de puissance successives (M) dans des bandes de fréquence différentes, ces périodes de temps étant nécessaires à la stabilisation d'un synthétiseur de fréquence (30) de la station radio mobile (MSi) après la commutation d'un canal radiofréquence (fi, fi') vers un autre.

3. Procédé de réduction de consommation selon les revendications 1 ou 2, dans lequel le mode d'absence d'appel est un mode de sélection initiale de cellule.

4. Procédé de réduction de consommation selon les revendications 1 ou 2, dans lequel l'état d'absence d'appel est un état dans lequel la station radio mobile (MSi) effectue une recherche de réseau public de radiotéléphonie mobile.

5. Procédé de réduction de consommation selon les revendications 1 ou 2, dans lequel l'état d'absence d'appel est un état dans lequel la station radio mobile (MSi) effectue une recherche de son réseau public de radiotéléphonie mobile de rattachement lorsqu'elle est en mode veille avec appel d'urgence.

6. Station radio mobile (MSi) appliquant le procédé défini dans la revendication 1.
